# EUROPÄISCHE PATENTANMELDUNG

(11) **EP 0 684 675 A1**
(43) Veröffentlichungstag der Anmeldung: **29.11.1995**
(21) Anmeldenummer: 94108013.7
(22) Anmeldetag: 25.05.1994
(51) Int. Cl.: H02G 5/00

(54) **Isolierende Schutzhülle für Stromschienen, insbesondere in Kraftwerken**

(71) Anmelder: F.I.L.P. S.p.A., I-20129 Milano (IT)
(72) Erfinder: Marcassoli, Eugenio, I-20129 Milano (IT)
(74) Vertreter: Jaumann, Paolo

(57) **Zusammenfassung**

Die Hülle besteht aus zwei mittels zumindest einer Schwalbenschwanzverbindung zusammenfügbaren Halbschalen. Die Achse des Schwalbenschwanzkeils ist gegenüber der Achse der Schwalbenschwanznut geringfügig versetzt. Keil und Nut weisen eine das Einrasten des Keils in die Nut erleichternde Schräge auf.

## Beschreibung

Die vorliegende Erfindung bezieht sich auf eine beschränkt elastisch verformbare, durch zwei mittels zumindest einer Verbindung zusammenfügbare Halbschalen gebildete Hülle aus elektrisch isolierendem Material, welche als isolierende Schutzhülle für Stromschienen, insbesondere in Kraftwerken, dient.

Die Aufgabe der vorliegenden Erfindung liegt hauptsächlich darin, eine einfache und zuverlässige Anbringung der Hüllen nach erfolgter Installation der Stromschienen bzw. nach erfolgtem Zusammenbau des Kraftwerkes zu ermöglichen.

Dieses und weitere Ziele und Vorteile der vorliegenden Erfindung werden im wesentlichen dadurch erreicht, dass die Verbindung zur Zusammenfügung der Halbschalen eine einrastbare, durch einen Schwalbenschwanzkeil und eine entsprechende Schwalbenschwanznut gebildete Schwalbenschwanzverbindung ist, dass die Achse des Schwalbenschwanzkeils gegenüber der Achse der entsprechenden Schwalbenschwanznut geringfügig in senkrecht zur Richtung der Zusammenfügung der Halbschalen verlaufender Richtung versetzt ist, und dass Keil und Nut der Schwalbenschwanzverbindung eine das Einrasten des Keils in die Nut erleichternde Schräge aufweisen.

Ausführungsbeispiele der vorliegenden Erfindung, auf welche letztere allerdings nicht beschränkt ist, sind in den bei liegenden Zeichnungen schematisch dargestellt. Dabei zeigen:

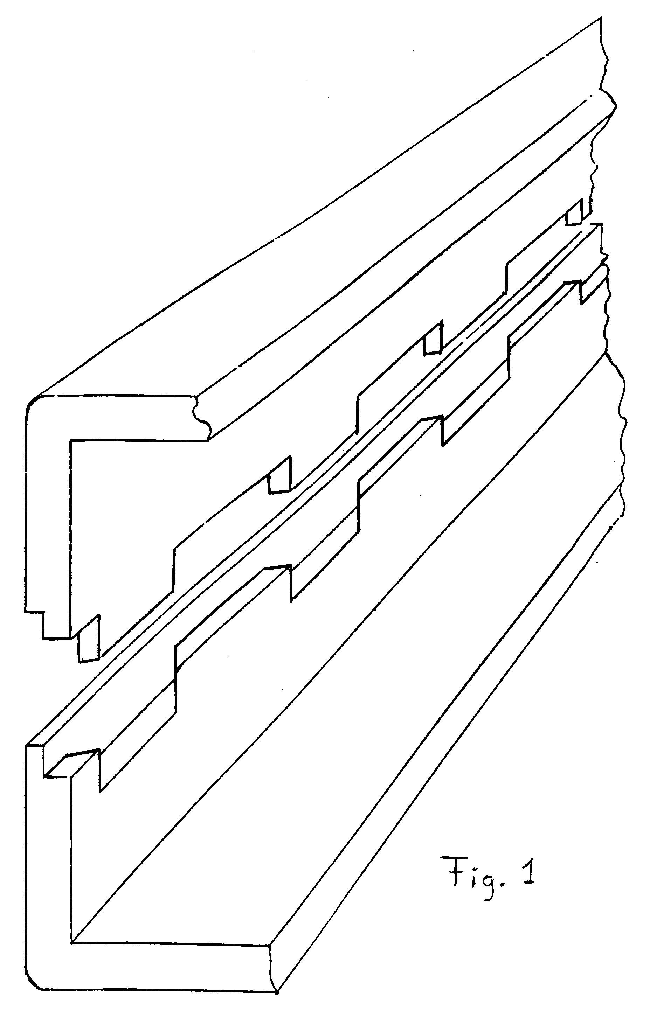

- Figur 1,: perspektivisch, einen Ausschnitt aus zwei Halbschalen, die zur Bildung einer Hülle unter Einrasten von Schwalbenschwanzkeilen in entsprechende Schwalbenschwanznuten zusammenzufügen sind.

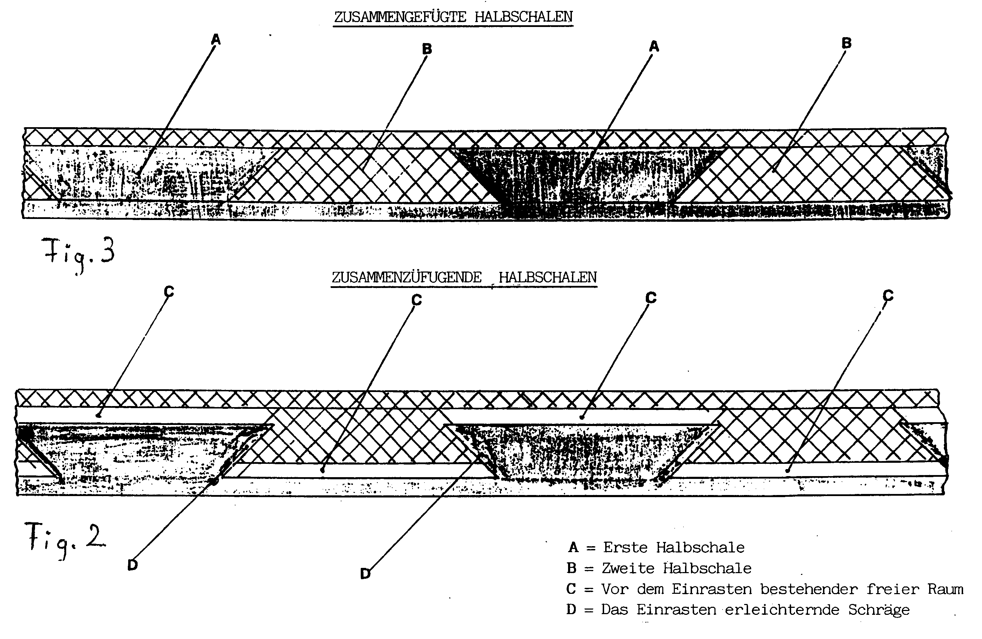

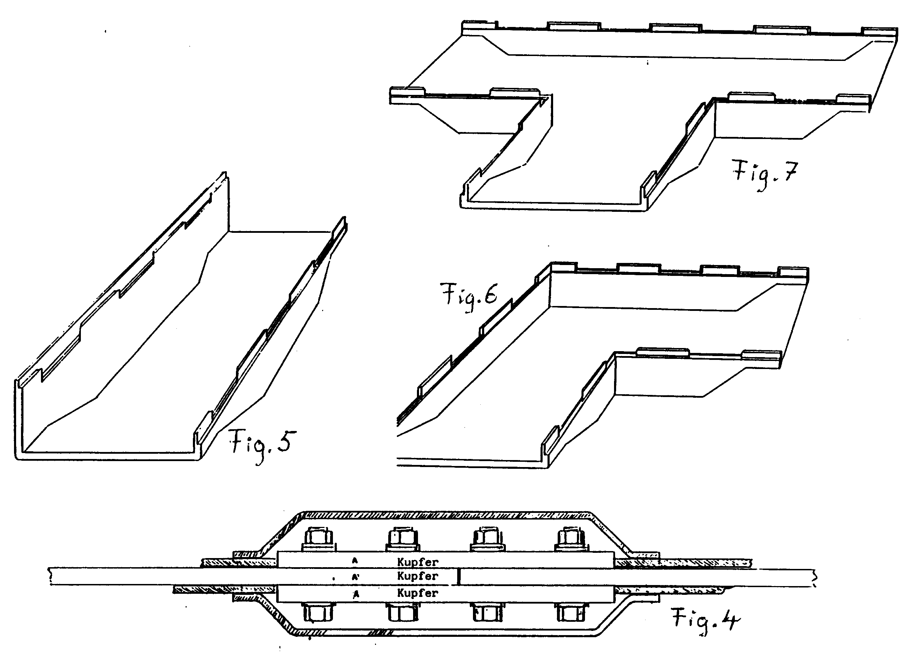

- Figur 2 und 3,: schematisch, die Zusammenfügung der beiden Halbschalen vor und nach dem Einrasten. Im einzelnen ist die zur Erleichterung des Einrastens vorgesehene Schräge ersichtlich.
- Figur 4,: in Schnittansicht, eine lineare Hülle,
- Figur 5,: perspektivisch, eine Halbschale einer weiteren, linearen Hülle,
- Figur 6,: perspektivisch, eine Halbschale einer L-förmigen Hülle,
- Figur 7,: perspektivisch, eine Halbschale einer T-förmigen Hülle.

## Patentansprüche

1. Beschränkt elastisch verformbare, durch zwei mittels zumindest einer Verbindung zusammenfügbare Halbschalen gebildete Hülle aus elektrisch isolierendem Material, welche als isolierende Schutzhülle für Stromschienen, insbesondere in Kraftwerken, dient,
**dadurch gekennzeichnet,**
dass die Verbindung zur Zusammenfügung der Halbschalen eine einrastbare, durch einen Schwalbenschwanzkeil und eine entsprechende Schwalbenschwanznut gebildete Schwalbenschwanzverbindung ist, dass die Achse des Schwalbenschwanzkeils gegenüber der Achse der entsprechenden Schwalbenschwanznut geringfügig in senkrecht zur Richtung der Zusammenfügung der Halbschalen verlaufender Richtung versetzt ist, und dass Keil und Nut der Schwalbenschwanzverbindung eine das Einrasten des Keils in die Nut erleichternde Schräge aufweisen.

2. Hülle nach Anspruch 1,
**dadurch gekennzeichnet,**
dass Schwalbenschwanzkeile und Schwalbenschwanznuten sinch längs der zusammenzufügenden Ränder einer jeden Halbschale abwechseln.

3. Hülle nach Anspruch 1 oder 2,
**dadurch gekennzeichnet,**
dass ein hochwarmfestes, selbstlöschendes Material als beschränkt elastisch verformbares, elektrisch isolierendes Material dient.

4. Hülle nach mindestens einem der Ansprüche 1 bis 3,
**dadurch gekennzeichnet,**
dass die beiden Halbschalen im zusammengefügten Zustand eine lineare Hülle bilden.

5. Hülle nach mindestens einem der Ansprüche 1 bis 3,
**dadurch gekennzeichnet,**
dass die beiden Halbschalen im zusammengefügten Zustand eine L-förmige Hülle bilden.

6. Hülle nach mindestens einem der Ansprüche 1 bis 3,
**dadurch gekennzeichnet,**
dass die beiden Halbschalen im zusammengefügten Zustand eine T-förmige Hülle bilden.

7. Als isolierende Schutzhülle für einen Stromschienenabschnitt dienende Hülle nach mindestens einem der Ansprüche 1 bis 3,
**dadurch gekennzeichnet,**
dass die beiden Halbschalen im zusammengefügten Zustand eine Hülle bilden, deren Gestaltung der Form des Stromschienenabschnittes angepasst ist.

8. Als isolierende Schutzhülle für einen Stromschienenverband dienende Hülle nach mindestens einem der Ansprüche 1 bis 3,
**dadurch gekennzeichnet,**
dass die beiden Halbschalen im zusammengefügten Zustand eine Hülle bilden, deren Gestaltung der Form des Stromschienenverbandes angepasst ist.

9. Isolierendes Schutzverkleidungssystem für Stromschienen, bestehend aus einer Anzahl Hüllen, welche jeweils die Merkmale mindestens eines der vorangehenden Ansprüche aufweisen.
